Europäisches Patentamt

European Patent Office

Office européen des brevets

(11) Veröffentlichungsnummer: **0 175 136**
**B1**

(12) **EUROPÄISCHE PATENTSCHRIFT**

(45) Veröffentlichungstag der Patentschrift:
14.06.89

(51) Int. Cl.⁴: **H 05 B 7/12,** H 05 B 7/085

(21) Anmeldenummer: 85110045.3

(22) Anmeldetag: 09.08.85

(54) Schutzüberzug auf Graphitelektroden.

(30) Priorität: 13.08.84 BG 66584/84

(43) Veröffentlichungstag der Anmeldung:
26.03.86 Patentblatt 86/13

(45) Bekanntmachung des Hinweises auf die Patenterteilung:
14.06.89 Patentblatt 89/24

(84) Benannte Vertragsstaaten:
AT BE CH DE FR GB IT LI NL SE

(56) Entgegenhaltungen:
DE-A- 2 021 399
DE-A- 2 305 276
FR-A- 1 569 922
FR-A- 2 283 874
GB-A- 996 859
LU-A- 60 512
US-A- 3 553 010

(73) Patentinhaber: N P P PO ELEKTROTERMIA, Botunez,
BG-1770 Sofia (BG)

(72) Erfinder: **Peev, Vassil Georgiev, Dipl.-Ing., Komplex
Borovo Block 230, Sofia (BG)**
Erfinder: **Zonevski, Maksim Obretenov, Dipl.-Ing.,
Slavjanska-Str. 20, Sofia (BG)**
Erfinder: **Pirov, Jordan Todorov, Dipl.-Ing.,
Tundja-Str. 21, Sofia (BG)**

(74) Vertreter: **Finck, Dieter et al, Patentanwälte v. Füner,
Ebbinghaus, Finck Mariahilfplatz 2 & 3,
D-8000 München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Schutzüberzug auf Graphitelektroden für Lichtbogenöfen.

Bekannt sind Schutzüberzüge auf Graphitelektroden bestehend aus einer oder mehreren Schichten, die nach dem in der BG-PS 11 029 beschriebenen Verfahren hergestellt werden. Gemäss diesem Verfahren werden die einzelnen Schichten des Überzugs mittels Lichtbogenbearbeitung einer Schicht aus metallisiertem Aluminium gebildet, auf die ein Gemisch von Legierungszusätzen aufgetragen wird. Die Legierungszusätze enthalten gemäss der BG-PS 136 Silizium, Siliziumkarbid, Titandioxid, Borsäure und Aluminiumpulver.

Nachteil der beschriebenen Überzüge ist ihre verhältnismässig geringe Korrosionsbeständigkeit bei einer Temperatur über 1550°C in oxydierendem Medium.

Aufgabe der Erfindung ist es, einen Schutzüberzug auf Graphitelektroden zu schaffen, dessen Korrosionsbeständigkeit höher ist als die der bekannten Überzüge bei einer Temperatur von 1600°C an Luft.

Diese Aufgabe wird erfindungsgemäss durch einen Schutzüberzug gelöst, der aus drei Schichten besteht und welcher nach dem in der BG-PS 11 029 beschriebenen Verfahren hergestellt wird. Als Legierungszusätze in der ersten und in der zweiten Schicht oder nur in der zweiten Schicht werden Nickel und Eisen oder ihre Oxide verwendet, wobei der Gehalt an Nickel in den Grenzen von 0,05% bis 0,95% und an Eisen in den Grenzen von 0,1 bis 15% gegenüber der gesamten Aluminiummenge in der Schicht liegt. Jede der Schichten wird einer Wärmebehandlung mit einer Wärmestromdichte von 8 bis $16 \cdot 10^6$ W/m² ausgesetzt.

Die dritte Schicht besteht aus technisch reinem Aluminium. Der derart hergestellte Überzug verliert seine Schutzeigenschaften nach 11 bis 14 Stunden bei einer Temperatur von 1600°C an Luft, während die oben erwähnten bekannten Überzüge bei denselben Verhältnissen ihre Schutzeigenschaften nach 4 bis 5 Stunden verlieren.

Die Erfindung wird anhand von einem Beispiel näher erläutert.

## Beispiel

Auf die Oberfläche der Graphitelektrode wird 590 g/m² technisch reines Aluminium aufgetragen. Darauf wird ein Überzug mit folgender Zusammensetzung aufgetragen: 57 g/m² Aluminiumpulver, 60 g/m² Siliziumkarbid, 64 g/m² Silizium, 38 g/m² Borsäure und 74 g/m² Titandioxid. Danach folgt eine Wärmebehandlung mit einer Wärmestromdichte von $8 \cdot 10^6$ W/m². Auf die derart gebildete Schicht wird mittels Metallisieren 850 g/m² Aluminium aufgetragen. Darauf kommt ein Überzug mit folgender Zusammensetzung: 80 g/m² Eisenoxid, 12 g/m² Nickel und 20 g/m² Aluminiumpulver. Anschliessend wird eine Wärmebehandlung mit einer Wärmestromdichte von $15 \cdot 10^6$ W/m² vorgenommen. Auf die derart hergestellte zweite Schicht wird mittels Metallisieren 1100 g/m² Aluminium aufgetragen, wonach die Oberfläche mittels einer Drahtbürste geschliffen wird.

## Patentansprüche

1. Schutzüberzug auf Graphitelektroden, welcher aus drei Schichten besteht, von denen die erste und zweite Schicht aus metallisiertem Aluminium bestehen mit einem Überzug aus Aluminiumpulver, Siliziumkarbid, Silizium, Titandioxid und Borsäure, die einer Lichtbogenbehandlung unterzogen sind und eine dritte Schicht aus reinem Aluminium, dadurch gekennzeichnet, dass die erste und zweite Schicht oder nur die zweite Schicht von 0,05 bis 0,95% Gw.-A. Nickel und von 0,1 bis 15% Gw.-A. Eisen bezogen auf die gesamte Aluminiummenge in der Schicht enthalten.

## Revendication

1. Revêtement de protection d'électrodes en graphite, lequel se compose de trois couches, parmi lesquelles la première et la deuxième couche se composent d'aluminium déposé par métallisation avec un revêtement de poudre fine d'aluminium, de carbure de silicium, de silicium, de dioxyde de titane et d'acide borique, qui sont soumises à un traitement par arc électrique, et une troisième couche en aluminium pur, caractérisé par le fait que les première et deuxième couches, ou seulement la deuxième couche, contiennent de 0,05 à 0,95% en poids de nickel et de 0,1 à 15% en poids de fer, par rapport à la quantité totale d'aluminium de la couche.

## Claims

1. Protective coating on graphite electrodes which consists of three layers, of which the first and second layer consists of metallized aluminium with a coating of aluminium powder, silicon carbide, silicon, titanium dioxide and boric acid, which are subjected to an electric arc treatment and a third layer of pure aluminium, characterised in that the first and second layer or only the second layer contain from 0.05 to 0.95% by weight nickel and from 0.1 to 15% by weight iron related to the total amount of aluminium in the layer.